# EUROPEAN PATENT APPLICATION

(11) **EP 4 813 695 A1**
(43) Date of publication of application: **30.09.2026**
(21) Application number: 26163162.6
(22) Date of filing: 09.03.2026
(51) Int. Cl.: B60K 1/04, B60L 50/64, H01M 50/209

(54) **VEHICLE REAR PORTION STRUCTURE**

(30) Priority: 26.03.2025 JP 2025052182
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP)
(74) Representative: TBK

(57) **Abstract**

A vehicle rear portion structure, includes: a power storage device having a plurality of battery cells; a bus bar disposed at a vehicle rear side of the power storage device; a flow path member configuring a smoke exhaust flow path; and a smoke exhaust flow path cover disposed at a lower side, in a vehicle vertical direction, of the bus bar and configuring a portion of the flow path member.

## Description

### BACKGROUND

### Technical Field

The present disclosure relates to a vehicle rear portion structure.

### Related Art

Japanese Patent No. 7259673 discloses a battery pack having a battery module that contains plural battery cells, and a smoke exhaust flow path that is provided at a lower side of the battery cells and through which flows gas exhausted from the battery cells.

In the battery pack, a constant flow path sectional surface area of the smoke exhaust flow path, through which smoke flows to the vehicle outer side when smoke is generated at a battery cell, must be ensured while interference with other members is avoided, and there is room for improvement of the structure of the smoke exhaust flow path. In particular, there are cases in which high-voltage connection parts such as a bus bar are disposed at the upper side of a smoke exhaust valve that exhausts smoke that has flowed in from the smoke exhaust flow path, and it is desirable to avoid interference of the smoke exhaust flow path with the bus bar.

### SUMMARY

The present disclosure provides a vehicle rear portion structure in which a smoke exhaust flow path can be disposed such that the flow path sectional surface area thereof is ensured, while interference of the smoke exhaust flow path with a bus bar is avoided.

A vehicle rear portion structure of a first aspect relating to the present disclosure has: a power storage device having plural battery cells; a bus bar disposed at a vehicle rear side of the power storage device; a flow path member configuring a smoke exhaust flow path; and a smoke exhaust flow path cover disposed at a lower side, in a vehicle vertical direction , of the bus bar and configuring a portion of the flow path member.

In the vehicle rear portion structure of the first aspect, the smoke exhaust flow path cover that configures a portion of the flow path member is disposed at the lower side in the vehicle vertical direction of the bus bar. Therefore, the smoke exhaust flow path can be disposed such that the flow path sectional surface area thereof is ensured, while avoiding interference with the bus bar beneath the bus bar.

In a vehicle rear portion structure of a second aspect relating to the present disclosure, in the structure of the first aspect, the smoke exhaust flow path cover configures a portion of an upper side, in the a vehicle vertical direction, of the flow path member.

In the vehicle rear portion structure of the second aspect relating to the present disclosure, the smoke exhaust flow path cover configures a portion of an upper side, in the vehicle vertical direction, of the flow path member. Therefore, the smoke exhaust flow path cover is positioned between the smoke exhaust flow path and the bus bar. Due thereto, smoke contacting the bus bar can be hindered by the smoke exhaust flow path cover.

In a vehicle rear portion structure of a third aspect relating to the present disclosure, in the structure of the first aspect or the second aspect, the smoke exhaust flow path cover is spaced apart from the bus bar.

In the vehicle rear portion structure of the third aspect, because the smoke exhaust flow path cover is spaced apart from the bus bar, even if the heat of smoke acts on the smoke exhaust flow path cover, it is difficult for heat to be transmitted from the smoke exhaust flow path cover to the bus bar.

In a vehicle rear portion structure of a fourth aspect relating to the present disclosure, the structure of any one of the first aspect through the third aspect has a smoke exhaust valve provided at a downstream side end portion of the smoke exhaust flow path, and exhausting smoke to an exterior, wherein the smoke exhaust valve is disposed at a lower side, in the vehicle vertical direction, of the smoke exhaust flow path cover.

In the vehicle rear portion structure of the fourth aspect relating to the present disclosure, the smoke exhaust valve is disposed at the lower side, in the vehicle vertical direction, of the smoke exhaust flow path cover. Therefore, smoke can be exhausted from the smoke exhaust valve more efficiently by using the space at the lower side of the smoke exhaust flow path cover.

The vehicle rear portion structure relating to the present disclosure has the effect that a smoke exhaust flow path can be disposed such that the flow path sectional surface area thereof is guaranteed, while interference of the smoke exhaust flow path with a bus bar is avoided.

### BRIEF DESCRIPTION OF THE DRAWINGS

An exemplary embodiment of the present disclosure will be described in detail based on the following figures, wherein:
Fig. 1 is a schematic plan view illustrating a vehicle rear portion structure relating to a present embodiment;
Fig. 2 is a schematic perspective view illustrating a storage battery pack and a smoke exhausting structure that are provided at the vehicle rear portion structure relating to the present embodiment;
Fig. 3 is a schematic sectional view in which the vehicle rear portion structure of Fig. 1 is cut along a vehicle longitudinal direction;
Fig. 4 is a schematic sectional view in which the vehicle rear portion structure of Fig. 1 is cut along a vehicle transverse direction;
Fig. 5 is a schematic sectional view in which the vehicle rear portion structure of Fig. 1 is cut along line A-A;
Fig. 6 is a partial, enlarged sectional view illustrating a portion of Fig. 4 in an enlarged manner;
Fig. 7 is an enlarged perspective view of main portions illustrating, in an enlarged manner, main portions of the vehicle rear portion structure relating to the present embodiment;
Fig. 8 is an enlarged, detailed perspective view of main portions illustrating, in an enlarged manner and in detail, a portion of Fig. 7;
Fig. 9 is a schematic sectional view in which the vehicle rear portion structure of Fig. 8 is cut along line B-B; and
Fig. 10 is an exploded perspective view illustrating, in an enlarged manner, main portions of a rear portion of the storage battery pack illustrated in Fig. 1.

### DETAILED DESCRIPTION

A vehicle rear portion structure of a first embodiment of the present disclosure is described hereinafter with reference to the drawings. Note that, hereinafter, mainly the scope that is necessary for explaining the technique of the present disclosure is described, and portions for which description is omitted are considered to be in accordance with known art. Members that are the same or correspond to one another in the drawings are denoted by the same or similar reference numerals, and redundant description is omitted. Further, in cases in which there is a plurality of the same or corresponding members in the drawings, reference numerals may be applied to only some thereof in order to make the drawings easier to understand. Arrow FR, arrow UP and arrow LH in the drawings indicate the vehicle frontward direction, the vehicle upward direction, and the vehicle leftward direction of a vehicle 10, respectively. In the following description, when merely longitudinal, vertical and left-right directions are used without being specified, they refer to the longitudinal of the vehicle longitudinal direction, the vertical of the vehicle vertical direction, and the left and right of the vehicle transverse direction (the left-right direction), respectively.

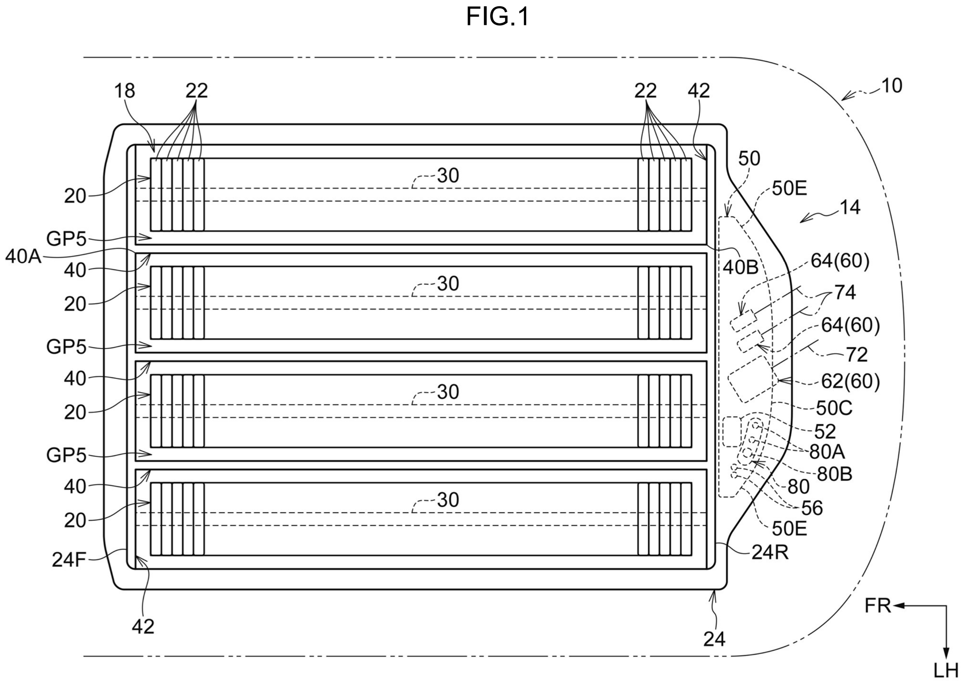

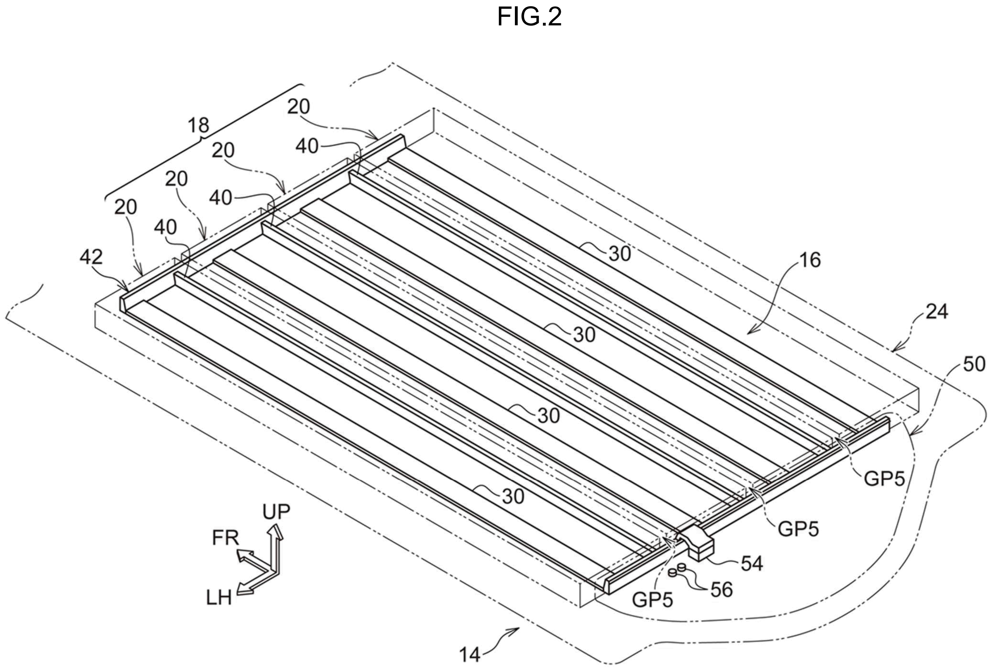

Fig. 1 is a schematic plan view illustrating a portion of the vehicle 10 as an example that has a vehicle rear portion structure 14 of the present embodiment. Fig. 2 is a schematic perspective view illustrating a storage battery pack 18, which serves as a power storage device installed in the vehicle 10, and a smoke exhausting structure 16. Note that illustration of an upper cover 26 that is described later is omitted in Fig. 1 and Fig. 2.

As illustrated in Fig. 1, the storage battery pack 18 is installed in the vehicle 10. As illustrated in Fig. 2 as well, the storage battery pack 18 has plural (four in the present embodiment) storage battery modules 20. The plural storage battery modules 20 are disposed so as to be lined-up in the vehicle transverse direction. Gaps GP5 are formed between the storage battery modules 20. In the present embodiment, because there are four of the storage battery modules 20, there are three of the gaps GP5 that are formed between the storage battery modules 20.

Each of the storage battery modules 20 has storage battery cells 22 that serve as plural battery cells. The plural storage battery cells 22 are disposed so as to be lined-up in the vehicle longitudinal direction in the storage battery modules 20. Namely, the storage battery pack 18 is a structure in which the plural storage battery modules 20, which have the plural storage battery cells 22 that are disposed so as to be lined-up in the vehicle longitudinal direction, are disposed so as to be lined-up in the vehicle transverse direction.

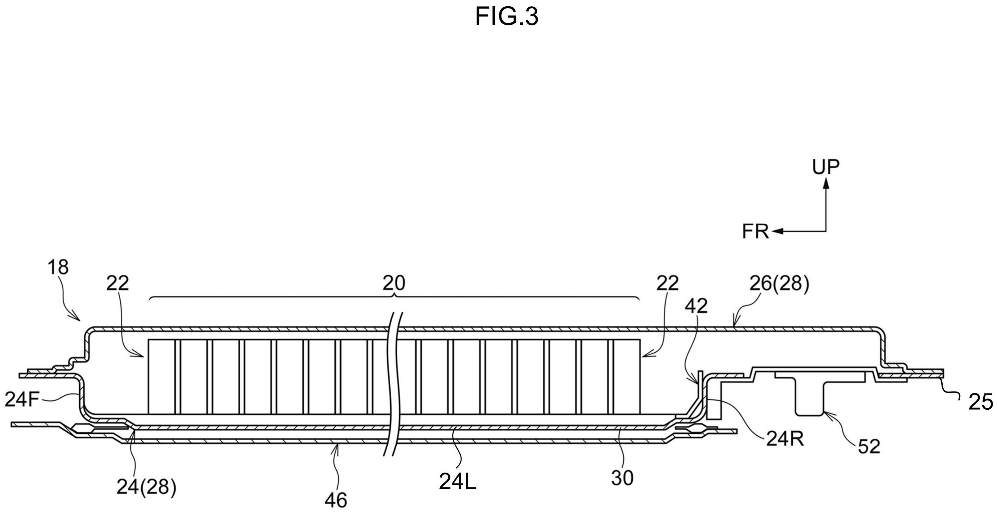

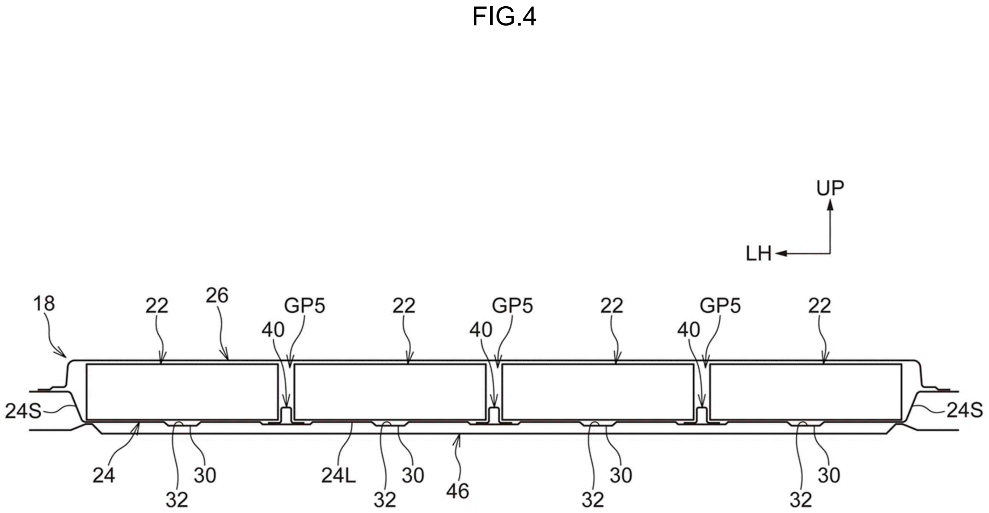

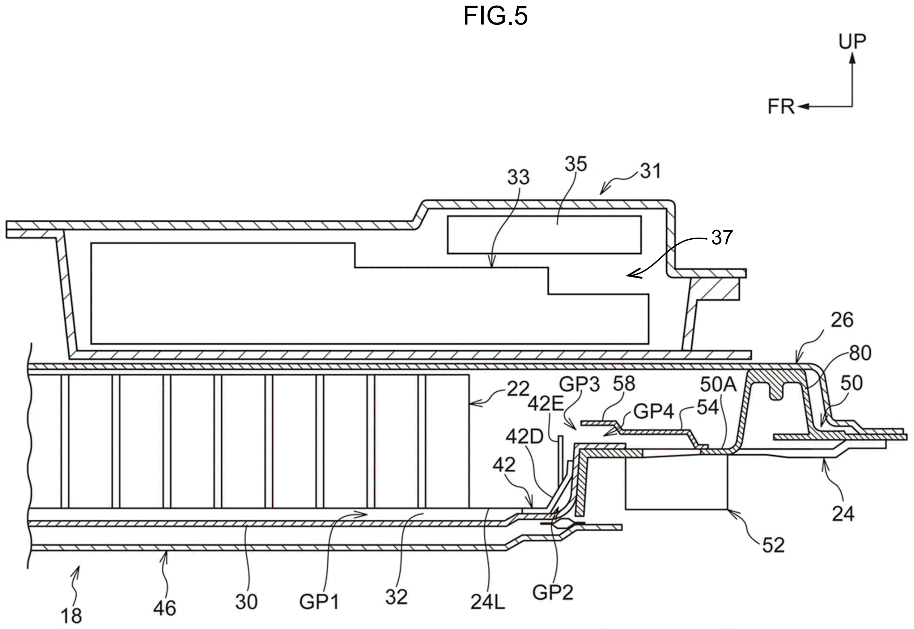

Fig. 3 is a cross-sectional view in which the vehicle rear portion structure 14 illustrated in Fig. 1 is cut along the vehicle longitudinal direction. Fig. 4 is a cross-sectional view in which the vehicle rear portion structure 14 illustrated in Fig. 1 is cut along the vehicle transverse direction. Fig. 5 is a schematic sectional view in which the vehicle rear portion structure of Fig. 1 is cut along line A-A.

As illustrated in Fig. 3 through Fig. 5, the storage battery pack 18 has a lower case 24 and the upper cover 26. The lower case 24 is a box-shaped member that can accommodate the storage battery modules 20, and is structured to include a lower plate 24L, a front plate 24F, a rear plate 24R and a pair of left and right side plates 24S. The lower plate 24L is a plate-shaped region that supports the storage battery modules 20 from the lower side. The front plate 24F and the rear plate 24R are plate-shaped regions that stand erect from the front side and the rear side of the lower plate 24L, respectively. The side plates 24S are plate-shaped regions that stand erect from the vehicle transverse direction both sides of the lower plate 24L. The upper surface of the lower case 24 is open, and, as illustrated in Fig. 3, a flange portion 25 juts-out from the peripheral edge of the lower case 24 toward the outer side.

The upper cover 26 is a lid-shaped member that closes the upper surface of the lower case 24. The periphery of the lower case 24 and the periphery of the upper cover 26 are joined together. A storage battery case 28 serving as a battery case is structured by the lower case 24 and the upper cover 26. The plural storage battery modules 20 that are structured by the plural storage battery cells 22 are accommodated so as to be lined-up in the vehicle transverse direction in the interior space of this storage battery case 28.

A shear panel 46 is disposed at the lower side of the storage battery pack 18. In the present embodiment, the shear panel 46 covers the lower surface of the storage battery pack 18 and protects the storage battery modules 20 from foreign objects from the road and the like.

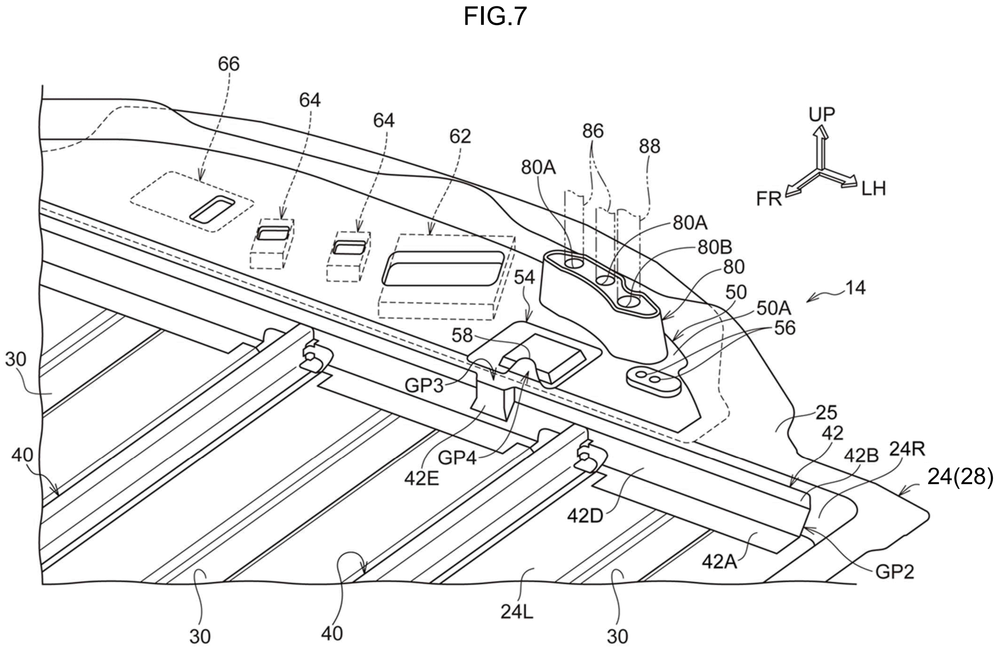

As illustrated in Fig. 5, an equipment case 31 is disposed above the rear end portion of the upper cover 26. A junction box 33 (control device) that houses a relay and auxiliary equipment, and an ECU (control device) 35, and the like are disposed within the equipment case 31. The relay and the auxiliary equipment are connected to the storage battery modules 20 by a wiring tube 88 (see Fig. 7) such as a wire harness that is described later, and are electrically connected to the storage battery modules 20.

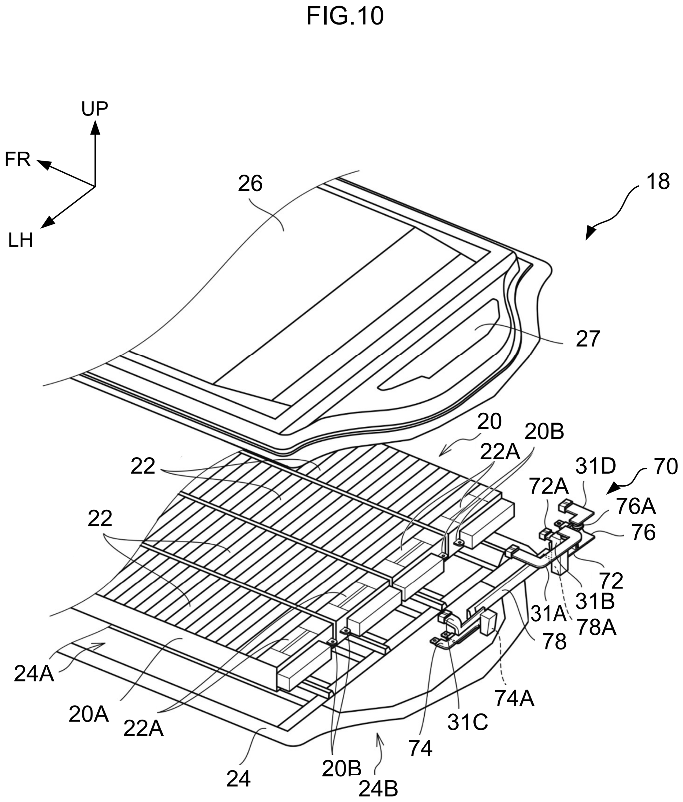

An opening portion 27 (see Fig. 10) is formed in the rear end portion of the upper cover 26. An interior space 37 of the equipment case 31 illustrated in Fig. 5 and the interior of the storage battery pack 18 communicate through this opening portion 27.

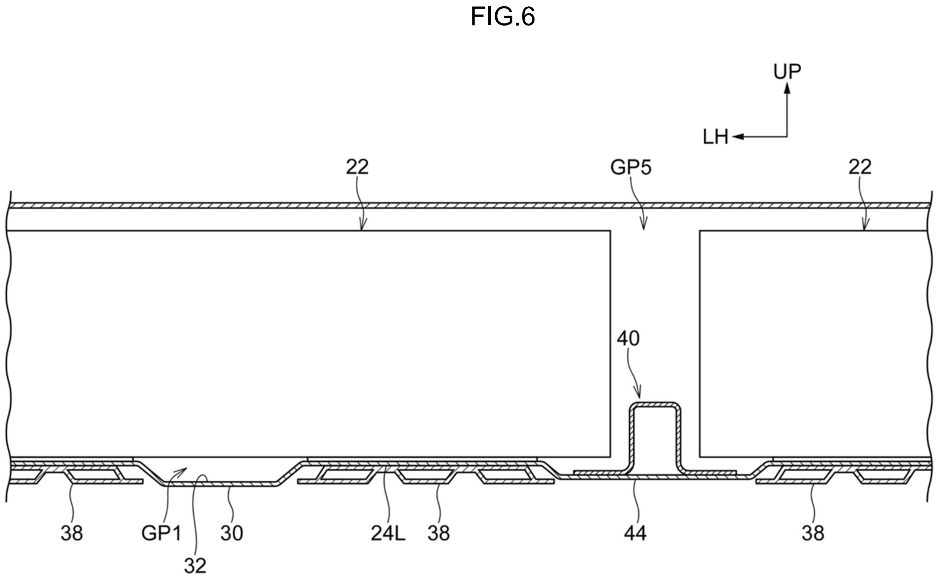

Fig. 6 is a partial, enlarged sectional view illustrating a portion of Fig. 4 in an enlarged manner. Fig. 7 is an enlarged perspective view of main portions illustrating, in an enlarged manner, main portions of the vehicle rear portion structure 14 relating to the present embodiment, and a perspective view of the rear plate 24R side of the lower case 24 is illustrated therein.

As illustrated in Fig. 6 and Fig. 7 as well, the lower plate 24L of the lower case 24 is adhered by an adhesive to the lower surfaces of the respective storage battery cells 22.

Plural (the same number as the number of the storage battery modules 20) downwardly convex portions 30 are formed at the lower plate 24L. The downwardly convex portions 30 project out downwardly at the vehicle transverse direction central positions of the storage battery modules 20, respectively. Namely, at the downwardly convex portions 30, the lower case 24 is partially spaced apart from the lower surfaces of the storage battery cells 22, and gaps GP1 are formed.

The downwardly convex portions 30 are formed so as to extend in the vehicle longitudinal direction, i.e., the direction in which the storage battery cells 22 are lined-up, at the respective storage battery modules 20. The lengths in the vehicle longitudinal direction of the downwardly convex portions 30 are about the same as the lengths in the vehicle longitudinal direction of the storage battery modules 20. The downwardly convex portions 30 extend in the vehicle longitudinal direction continuously from a vicinity of the front plate 24F to a vicinity of the rear plate 24R.

In this way, due to the gaps GP1 that are spaced apart from the lower surfaces of the storage battery cells 22 extending in the vehicle longitudinal direction due to the downwardly convex portions 30, the gaps GP1 structure portions of a smoke exhaust flow path 32. If, for some reason, gas that contains smoke (hereinafter this gas is simply called "smoke") is generated at the storage battery cell 22, the smoke is exhausted from the vehicle transverse direction central position of the lower surface of the storage battery cell 22. Accordingly, smoke generated at the storage battery cell 22 flows into the gap GP1 structured by the downwardly convex portion 30. Note that the lower case 24 at which the downwardly convex portions 30 are formed is a portion of the flow path member that structures the smoke exhaust flow path 32. As will be described later, the smoke exhaust flow path 32 is provided continuously from the gaps GP1 to GP4, and generated smoke is efficiently guided to a smoke exhaust valve 52.

On the other hand, as illustrated in Fig. 6, coolers 38 are provided at the lower case 24 along the vehicle longitudinal direction. The coolers 38 are respectively provided at both vehicle transverse direction sides of the downwardly convex portions 30 at the lower surface of the lower case 24, and structure coolant flow paths that extend in the vehicle longitudinal direction. Due to heat of the coolers 38 being transferred to the coolant flowing through the coolant flow paths, the storage battery cells 22 are cooled, and overheating of the storage battery cells 22 can be suppressed.

As illustrated in Fig. 1, Fig. 2, Fig. 4 and Fig. 6, a reinforcing member 40 is disposed at each of the gaps GP5 that are between the storage battery modules 20. As illustrated in Fig. 6, as seen in a vehicle transverse direction cross-section, the reinforcing member 40 has a substantially hat-shaped cross-sectional shape whose lower side is open.

As illustrated in Fig. 1, the reinforcing members 40 have lengths such that they reach a vicinity of the front plate 24F of the lower case 24 and a vicinity of the rear plate 24R of the lower case 24. Front ends 40A and rear ends 40B of the reinforcing members 40 are joined to the front plate 24F and the rear plate 24R of the lower case 24 by joining members 42, respectively. The reinforcing members 40 thereby reinforce the storage battery pack 18.

As illustrated in Fig. 5 and Fig. 7, the joining member 42 has a first separate portion 42D, which is spaced apart from the rear plate 24R of the lower case 24, between joined surface 42A that planarly contacts the lower plate 24L of the lower case 24 and joined surface 42B that planarly contacts the rear plate 24R of the lower case 24. The first separate portion 42D is formed at an incline as seen in a cross-section in the vehicle longitudinal direction, and a gap GP2 is formed between the first separate portion 42D and the lower case 24. This gap GP2 is continuous in the vehicle transverse direction, and communicates with the gaps GP1 structured by the downwardly convex portions 30 and the lower surfaces of the storage battery cells 22. Namely, this gap GP2 structures a portion of the smoke exhaust flow path 32. Further, the joining member 42 is a portion of the flow path member that structures the smoke exhaust flow path 32.

On the other hand, as illustrated in Fig. 6, cell seats 44 are formed at the lower plate 24L of the lower case 24 at positions corresponding to the reinforcing members 40. The cell seats 44 are regions at which the lower plate 24L of the lower case 24 is formed so as to be convex downwardly at positions corresponding to the reinforcing members 40. The cell seats 44 are joined to the reinforcing members 40 and close-off the open portions at the lower sides of the reinforcing members 40.

The front ends 40A and the rear ends 40B of the reinforcing members 40 are open (see Fig. 1), and communicate with the gaps GP2 illustrated in Fig. 5. Namely, portions having closed cross-sectional shapes (shapes that are closed in a vehicle transverse direction cross-section) that are structured by the reinforcing members 40 and the cell seats 44 communicate with the smoke exhaust flow path 32 that is structured by the gaps GP2. Due thereto, the closed cross-sectional shapes formed by the reinforcing members 40 and the cell seats 44 also form portions of the smoke exhaust flow path 32. Namely, the reinforcing members 40 and the cell seats 44 are portions of the flow path member.

In the present embodiment, portions of the lower case 24 serve also as the cell seats 44. Namely, the portions of the lower case 24 that also serve as the cell seats 44 are structures that extend over the plural reinforcing members 40. In other words, the cell seats 44 are provided integrally with the plural reinforcing members 40 by the lower case 24, and portions of the smoke exhaust flow path 32 are structured.

Further, as illustrated in Fig. 1, a connector block 50 is disposed at the vehicle rear side of the lower case 24. The front side of the connector block 50 (the side at the vehicle front side) is rectilinear in the vehicle transverse direction. In contrast, the rear side of the connector block 50 (the side at the vehicle rear side) is curved such that the vehicle transverse direction center thereof is convex toward the vehicle rear side. Accordingly, central portion 50C in the vehicle transverse direction of the connector block 50 is longer in the vehicle longitudinal direction than both vehicle transverse direction end portions 50E.

Further, as illustrated in Fig. 1 and Fig. 5, the smoke exhaust valve 52 is mounted to the connector block 50. A cover plate 54, which serves as the smoke exhaust flow path cover and structures the smoke exhaust flow path 32 between the cover plate 54 and the connector block 50, is mounted to the connector block 50 from the storage battery pack 18 to the smoke exhaust valve 52. The cover plate 54 is a part that is separate from the storage battery case 28.

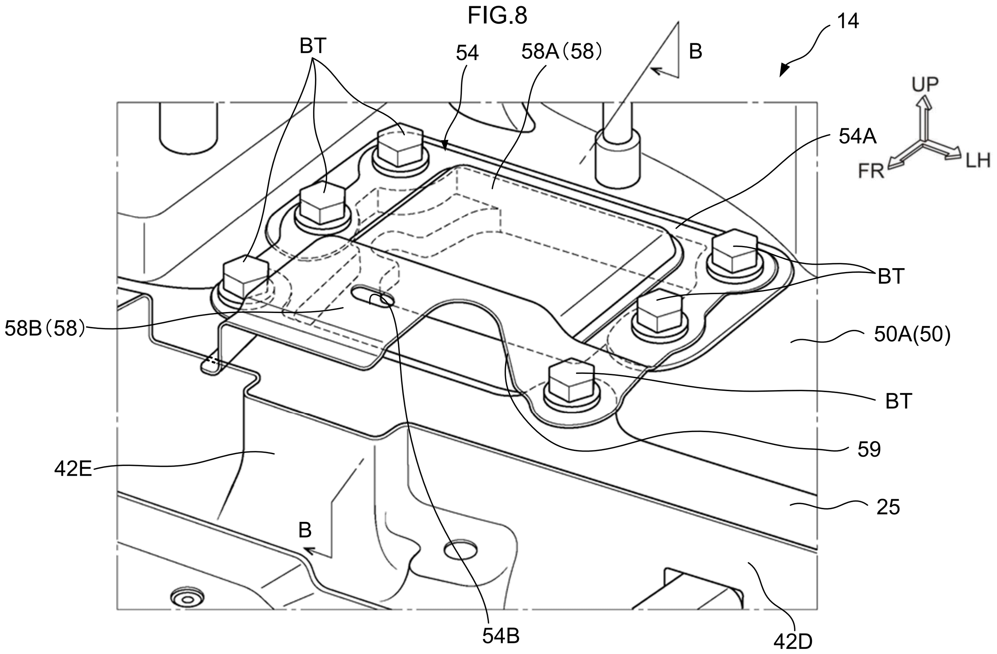

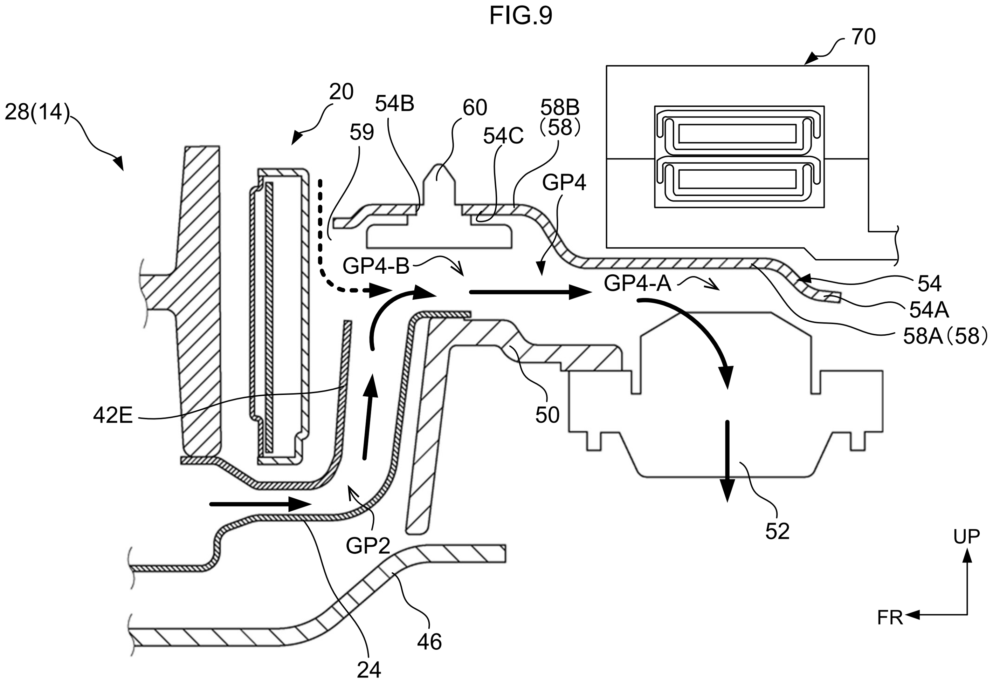

Fig. 8 is an enlarged, detailed perspective view of main portions illustrating, in an enlarged manner and in detail, a portion of Fig. 7, and a perspective view of a vicinity of the cover plate 54 is illustrated therein. Fig. 9 is a schematic sectional view in which the vehicle rear portion structure 14 of Fig. 8 is cut along line B-B.

As illustrated in Fig. 7 through Fig. 9, an upwardly convex portion 58 is formed at the cover plate 54. At the side thereof that is at the vehicle front side, the upwardly convex portion 58 is shaped such that the vehicle transverse direction central portion thereof is curved convexly upward. In other words, the cover plate 54 has a concave shape in which the lower side thereof is open. As illustrated in Fig. 8 and Fig. 9, specifically, the upwardly convex portion 58 has, as an example, a rear upwardly convex portion 58A positioned at the rear side and formed in a substantially rectangular shape as seen in a top view, and a front upwardly convex portion 58B extending at a forward and upward incline from the front end of the rear upwardly convex portion 58A and formed in a substantially rectangular shape as seen in a top view.

The rear upwardly convex portion 58A is formed such that the peripheral edge portions at the rear end and both side ends thereof extend from flat portion 54A of the cover plate 54 at an incline toward the inner and upper sides. As illustrated in Fig. 8, the flat portion 54A is fixed by fastening members BT such as bolts to upper surface 50A of the connector block 50. Further, as illustrated in Fig. 9, the rear upwardly convex portion 58A covers the upper side of the smoke exhaust valve 52, and a gap GP4-A is structured between the rear upwardly convex portion 58A and the smoke exhaust valve 52. Namely, by covering the upper side of the smoke exhaust valve 52, the rear upwardly convex portion 58A of the cover plate 54 forms the smoke exhaust valve 52 side portion of the smoke exhaust flow path 32.

The lower surface of the flat portion 54A at the rear end of the cover plate 54 abuts the upper surface 50A of the connector block 50. Therefore, the rear end of the gap GP4-A is closed-off, and the smoke exhaust flow path 32 also is closed-off. Namely, the smoke exhaust valve 52 is provided at the downstream side end portion of the smoke exhaust flow path 32.

The upper surface of the front upwardly convex portion 58B is positioned further toward the upper side than the upper surface of the rear upwardly convex portion 58A. The peripheral edge portions of the both side ends of the front upwardly convex portion 58B are fixed by the fastening members BT such as bolts to the flange portion 25. As described above, the rear end of the front upwardly convex portion 58B is connected to the front end of the rear upwardly convex portion 58A. On the other hand, the front end of the front upwardly convex portion 58B is open toward the front. Further, as illustrated in Fig. 9, the front end of the front upwardly convex portion 58B is positioned further toward the front side than the smoke exhaust valve 52, and the front end is disposed so as to extend out further toward the front side than the front end of the connector block 50. Moreover, as an example, the front end of the front upwardly convex portion 58B is disposed so as to be positioned further toward the front side than a second separate portion 42E that is described later.

As illustrated in Fig. 9, the front upwardly convex portion 58B covers the upper side of the gap GP2. A gap GP4-B is structured between the convex portion 58B and the lower case 24 and the connector block 50, and the gap GP2 and the gap GP4-B communicate with one another. Namely, due to the front upwardly convex portion 58B of the cover plate 54 covering the upper sides of the lower case 24 and the connector block 50, the front upwardly convex portion 58B forms the storage battery cell 22 side portion of the smoke exhaust flow path 32.

Further, as illustrated in Fig. 8, a window portion 59 is provided at the cover plate 54 at the side surface, which is at the storage battery cell 22 side, of the front upwardly convex portion 58B. The window portion 59 is provided so as to communicate with the open portion of the front end of the front upwardly convex portion 58B, and extends to the upper surface of the front upwardly convex portion 58B. In other words, the window portion 59 is formed due to the upper surface of the front upwardly convex portion 58B being cut-out from the front end to further toward the rear side than the center of the upper surface. As an example, the window portion 59 is provided so as to be directed toward the left side from the vehicle transverse direction center of the front upwardly convex portion 58B, and is formed so as to become narrower on progression toward the rear side. The rear end of the window portion 59 is formed in a circular arc shape.

Further, as illustrated in Fig. 9, the window portion 59 communicates with the smoke exhaust flow path 32 that the cover plate 54 forms, i.e., with the gap GP4-A and the gap GP4-B. Note that the gap GP4 that is formed between the cover plate 54 and the lower case 24 is structured by the gap GP4-A and the gap GP4-B. Smoke can move in the vehicle longitudinal direction through the gap GP4, and the gap GP4 forms a portion of the smoke exhaust flow path 32. Namely, the cover plate 54 is a portion of the flow path member that structures the smoke exhaust flow path 32, and, specifically, the cover plate 54 is a portion of the upper side of the flow path member.

A long hole 54B whose length direction is the vehicle transverse direction is provided in the cover plate 54 at the vehicle longitudinal direction central portion of a region that is further toward the vehicle transverse direction right side than the window portion 59 of the front upwardly convex portion 58B. As illustrated in Fig. 9, a smoke exhaust thermistor 60 serving as a temperature detecting portion is mounted in the long hole 54B. The smoke exhaust thermistor 60 detects the air temperature within the smoke exhaust flow path 32. The smoke exhaust thermistor 60 is disposed within the smoke exhaust flow path 32 that is formed by the cover plate 54, and specifically, is disposed within the gap GP4-B. Namely, the smoke exhaust thermistor 60 is provided at an inner side upper surface 54C that is at the upstream side of the smoke exhaust flow path 32 formed by the cover plate 54. Further, the smoke exhaust thermistor 60 is provided at a position at which it does not overlap with the smoke exhaust valve 52 as seen in a top view. Note that the temperature detecting portion is not limited to the smoke exhaust thermistor 60. Provided that it is a device that can detect the air temperature within the smoke exhaust flow path 32, any device may be used as the temperature detecting portion, and, for example, a thermometer may be used.

As illustrated in Fig. 7, the second separate portion 42E is provided at, among the two joining members 42, the joining member 42 that is disposed at the vehicle rear side. The second separate portion 42E is formed at a position corresponding to the upwardly convex portion 58 in the vehicle transverse direction. A gap GP3 is structured between the second separate portion 42E and the rear plate 24R of the lower case 24. Accordingly, the smoke exhaust flow path 32 within the storage battery pack 18 is formed so as to be continuous from the gaps GP1 between the lower surfaces of the storage battery cells 22 and the downwardly convex portions 30, through the gaps GP2 and GP3 between the joining member 42 and the lower case 24, and through the gap GP4 between the cover plate 54 and the lower case 24, all the way to the smoke exhaust valve 52.

The smoke exhaust valve 52 is configured to open when the internal pressure of the smoke exhaust flow path 32 becomes higher than the air pressure at the exterior of the smoke exhaust flow path 32 by a predetermined value or more. Namely, when smoke flows into the smoke exhaust flow path 32 and the internal pressure increases by a predetermined value or more, the smoke exhaust valve 52 opens, and gas within the smoke exhaust flow path 32 is exhausted to the exterior.

Moreover, breathable membranes 56 are mounted to the connector block 50. Gasses pass through the breathable membranes 56, but the passage of liquid (including vapor) is impeded. Gore-Tex^{™} for example is used as the material thereof. Further, the breathable membranes 56 are formed such that, even if gas passes therethrough, due to the breathable membranes 56 applying resistance to the movement of the gas, the gas does not move all at once in a short period of time. In the present embodiment, the breathable membranes 56 are provided at a position that is further toward the vehicle transverse direction outer side than the smoke exhaust valve 52.

On the other hand, as illustrated in Fig. 7, for example, a first connector 62 made of resin, second connectors 64 made of resin and a third connector 66 made of metal are disposed at the lower surface side of the connector block 50, including a region at the vehicle transverse direction central side. Note that, although not illustrated, wires are connected to these connectors respectively. Further, among these connectors, the first connector 62 is disposed at the smoke exhaust valve 52 side, and the second connectors 64 and the third connector 66 are disposed at the side of the first connector 62 that is opposite the side at which the smoke exhaust valve 52 is located.

Further, as illustrated in Fig. 1 and Fig. 7, the smoke exhaust valve 52 and the breathable membranes 56 are provided at the connector block 50 at a vehicle transverse direction outer side, and a routing block 80 is formed at the connector block 50 at further toward the vehicle rear side than the smoke exhaust valve 52 and the breathable membranes 56. This routing block 80 stands erect from the upper surface 50A of the connector block 50, and is shaped as a tube that is flat in the vehicle longitudinal direction.

Specifically, as seen from the vehicle upper side, the routing block 80 is shaped so as be longer in the vehicle transverse direction than in the vehicle longitudinal direction, and is provided at the outer edge side of the connector block 50. Further, as seen from the vehicle outer side, the routing block is formed in a substantially truncated cone shape, and the cross-sectional shape thereof that is cut along the horizontal direction becomes larger on progression toward the vehicle lower side.

First insert-through holes 80A and a second insert-through hole 80B that are circular and pass through the connector block 50 in the vertical direction are formed at the inner side of the routing block 80. In the present embodiment, there are two of the first insert-through holes 80A, and there is the one second insert-through hole 80B, and it has a larger diameter than the first insert-through holes 80A. The second insert-through hole 80B is provided further toward the vehicle transverse direction outer side than the first insert-through holes 80A. The two first insert-through holes 80A are spaced apart in the vehicle transverse direction, and further, the second insert-through hole 80B as well is spaced apart from the first insert-through holes 80A in the vehicle transverse direction.

For example, circulating pipes 86, which circulate cooling water to onboard equipment of the vehicle, are inserted through the first insert-through holes 80A. The wiring tube 88, in which are accommodated plural wires that transmit electrical signals to onboard equipment, is inserted through the second insert-through hole 80B. The circulating pipes 86 and the wiring tube 88 are examples of routed members that are routed in the vehicle. Namely, in the present embodiment, there is a structure in which the plural routed members that are spaced apart from one another in the vehicle transverse direction are inserted through the routing block 80 along the vertical direction.

On the other hand, as illustrated in Fig. 9, a bus bar 70 is disposed at the vehicle rear side of the storage battery case 28 in the vehicle rear portion structure 14. Specifically, the bus bar 70 is disposed at the upper side of the cover plate 54. In other words, the cover plate 54 is disposed at the lower side of the bus bar 70. In the present embodiment, the cover plate 54 is apart from the bus bar 70.

The bus bar 70 is described here. Fig. 10 is an exploded perspective view illustrating, in an enlarged manner, main portions of the rear portion of the storage battery pack 18 illustrated in Fig. 1. As illustrated in Fig. 10, the bus bar 70 has a positive electrode bus bar 72 and a negative electrode bus bar 74 that are electrically connected to the plural storage battery modules 20. The storage battery modules 20 are structured by the plural storage battery cells 22 that are lined-up in a row along the longitudinal direction, end plates 22A disposed at the longitudinal direction both end portions and supporting the plural storage battery cells 22, and a support 20A that supports the plural storage battery cells 22 and the end plates 22A. One terminal 20B that structures the positive electrode and one terminal 20B that structures the negative electrode of the storage battery module 20 are provided at the end plate 22A.

The lower case 24 is sectioned into a module setting region 24A on which the plural storage battery modules 20 are placed, and a bus bar placement region 24B where the positive electrode bus bar 72 and the negative electrode bus bar 74 are disposed. The module setting region 24A is structured by a region that is rectangular in accordance with the shapes of the plural storage battery modules 20. The bus bar placement region 24B is structured by a region whose width narrows toward the rear side, such that the storage battery pack 18 does not interfere with the rear wheels of the vehicle in which the storage battery pack 18 is installed, while ensuring space for routing the positive electrode bus bar 72 and the negative electrode bus bar 74.

The polarities of the terminals 20B at the both longitudinal direction ends of each of the plural storage battery modules 20 set at the module setting region 24A can be adjusted in accordance with the form of connection between the storage battery modules 20. In the present embodiment, as an example, the storage battery modules 20 are disposed such that, at the front sides and rear sides thereof respectively, the terminals 20B of the storage battery modules 20 that are adjacent to one another differ from one another.

Further, the equipment case 31 (see Fig. 5) is disposed at the upper portion of the rear portion of the upper cover 26, such that at least a portion of the equipment case 31 overlaps with the positive electrode bus bar 72 and the negative electrode bus bar 74 as seen in a plan view. The opening portion 27, which passes-through in the vertical direction and is for electrically connecting the equipment case 31 and the storage battery modules 20, is provided at a portion of the upper cover 26 which portion corresponds to the bus bar placement region 24B. Note that illustration of the equipment case 31 is omitted in Fig. 10.

The positive electrode bus bar 72 is connected to the positive electrodes of the plural storage battery modules 20, and is pulled-out to the bus bar placement region 24B. The positive electrode bus bar 72 structures a portion of the wiring for connecting the plural storage battery modules 20 and the electrical equipment that are at the interior of the equipment case 31, and can be structured by a strip-shaped metal plate. Contacts (not illustrated) are provided at the both ends of the positive electrode bus bar 72 of the present embodiment. One of the contacts is electrically connected to the terminal 20B that is provided at the rear end plate 22A at one end side in the left-right direction, among the plural storage battery modules 20 that are electrically connected to one another. Further, the portion of the positive electrode bus bar 72 that is other than the contacts is covered by an insulating cover (not illustrated). Copper, aluminum, brass and alloys thereof can be used for the various bus bars, including the positive electrode bus bar 72, that are used in the present embodiment.

The negative electrode bus bar 74 is connected to the negative electrodes of the plural storage battery modules 20, and is pulled-out to the bus bar placement region 24B. In the same way as the positive electrode bus bar 72, the negative electrode bus bar 74 also structures a portion of the wiring for connecting the plural storage battery modules 20 and the electrical equipment that are at the interior of the equipment case 31, and can be structured by a strip-shaped metal plate. Contacts (not illustrated) are provided at the both ends of the negative electrode bus bar 74 of the present embodiment. One of the contacts is electrically connected to the terminal 20B that is provided at the rear end plate 22A at the another end side in the left-right direction, among the plural storage battery modules 20 that are electrically connected to one another. Further, the portion of the negative electrode bus bar 74 that is other than the contacts is covered by an insulating cover (not illustrated).

Due to the positive electrode bus bar 72 and the negative electrode bus bar 74 being disposed at the rear of the plural storage battery modules 20, the wiring space of the respective bus bars can be aggregated at the rear of the storage battery modules 20. If such a structure is employed, there is no need to ensure space for the positive electrode bus bar 72 and the negative electrode bus bar 74 at the module setting region 24A of the lower case, and therefore, the space for setting the storage battery modules 20 can be made to be compact. In addition, because the positive electrode bus bar 72 and the negative electrode bus bar 74 are disposed so as to be aggregated, the assembly work, including the work for connecting the positive electrode bus bar 72 and the negative electrode bus bar 74 with the electrical equipment that are within the equipment case 31, is easy. Note that the positive electrode bus bar 72 and the negative electrode bus bar 74 are fixed to the lower case 24 and the upper cover 26 and the like by unillustrated fixing means such as bolts.

Further, in order to make partial charging/discharging of the plural storage battery modules 20 possible at the storage battery pack 18, neutral point bus bars 76, 78 are connected to neutral points of the plural storage battery modules 20 that are electrically connected to one another. In the same way as the positive electrode bus bar 72 and the negative electrode bus bar 74, the pair of neutral point bus bars 76, 78 of the present embodiment are pulled-out to the rear of the plural storage battery modules 20, and are disposed at the bus bar placement region 24B. Note that a neutral point means an intermediate point that divides the voltage of the plural storage battery modules that are electrically connected into two equal parts, or a voltage reference point.

In the same way as the positive electrode bus bar 72 and the negative electrode bus bar 74, the neutral point bus bars 76, 78 structure wiring for connecting the plural storage battery modules 20 and the electrical equipment that are within the equipment case 31, and can be structured by strip-shaped metal plates for example. Contacts (not illustrated) are provided at the both end portions of the neutral point bus bars 76, 78, respectively. Ones of the contacts of the neutral point bus bars 76, 78 are connected to neutral points at the plural storage battery modules 20 that are electrically connected. As an example, one contact of the one neutral point bus bar 76 is electrically connected to the terminal 20B provided at the end plate 22A that is at the rear of the storage battery module 20. Further, one contact of the another neutral point bus bar 78 is electrically connected to the terminal 20B provided at the end plate 22A that is at the rear of the storage battery module 20. The portions, other than the contacts, of the pair of neutral point bus bars 76, 78 are covered by insulating covers (not illustrated) respectively. The polarities of the terminals 20B to which the pair of neutral point bus bars 76, 78 are connected are not particularly limited, but, for example, the polarities of the respective terminals 20B are adjusted such that the one neutral point bus bar 76 becomes the negative electrode and the another neutral point bus bar 78 becomes the positive electrode.

The other contacts (not illustrated) of the above-described bus bars are connected to the electrical equipment that are within the equipment case 31. However, if the bus bars are directly routed to the electrical equipment that are within the equipment case 31, the entire lengths of the respective bus bars become long, and there is the possibility that handling and managing will be difficult. Therefore, in the present embodiment, the another contact (not illustrated) of the positive electrode bus bar 72 is connected to a terminal stand 72A, and similarly, the another contact (not illustrated) of the negative electrode bus bar 74 is connected to a terminal stand 74A, the another contact (not illustrated) of the one neutral point bus bar 76 is connected to a terminal stand 76A, and the another contact (not illustrated) of the another neutral point bus bar 78 is connected to terminal stand 78A. Then, a structure is employed in which the positive electrode bus bar 72, the negative electrode bus bar 74 and the pair of neutral point bus bars 76, 78 are connected to the electrical equipment that are within the equipment case 31 via these terminal stands 72A, 74A, 76A, 78A. Note that, in Fig. 10, among these terminal stands 72A, 74A, 76A, 78A, the terminal stand 74A to which the another contact (not illustrated) of the negative electrode bus bar 74 is connected and the terminal stand 78A to which the another contact (not illustrated) of the another neutral point bus bar 78 is connected are disposed at positions hidden by other members.

The storage battery pack 18 includes an equipment side positive electrode bus bar 31A, an equipment side negative electrode bus bar 31B and two equipment side neutral point bus bars 31C, 31D, whose one end portions are connected to the above-described terminal stands 72A, 74A, 76A, 78A. The equipment side positive electrode bus bar 31A, the equipment side negative electrode bus bar 31B and the two equipment side neutral point bus bars 31C, 31D can be structured by strip-shaped metal plates that are disposed at the rear of the electrical equipment that are within the equipment case 31. Further, the another end portions of the equipment side positive electrode bus bar 31A, the equipment side negative electrode bus bar 31B and the two equipment side neutral point bus bars 31C, 31D are electrically connected to electrical equipment that are within the equipment case 31, and more specifically, to the junction box 33 (see Fig. 5).

The equipment side positive electrode bus bar 31A is electrically connected to the positive electrode bus bar 72 via the terminal stand 72A. The equipment side negative electrode bus bar 31B is electrically connected to the negative electrode bus bar 74 via the terminal stand 74A. The two equipment side neutral point bus bars 31C, 31D are electrically connected to the two neutral point bus bars 76, 78 via the terminal stands 76A, 78A, respectively. Further, as an example, the terminal stands 72A, 74A, 76A, 78A are disposed at positions overlapping with the opening portion 27 as seen in a plan view in order to be able to realize, by short distances, connection with the equipment side positive electrode bus bar 31A, the equipment side negative electrode bus bar 31B and the two equipment side neutral point bus bars 31C, 31D, and in order to facilitate that connection work.

If the above-described terminal stands 72A, 74A, 76A, 78A are utilized, the entire lengths of the respective bus bars can be shortened, and handling and the like of the bus bars is easy. In addition, the connection of the terminal stands 72A, 74A, 76A, 78A and the equipment side positive electrode bus bar 31A, the equipment side negative electrode bus bar 31B and the two equipment side neutral point bus bars 31C, 31D can be carried out at the time when the electrical equipment within the equipment case 31 are mounted to the upper portion of the upper cover 26 of the storage battery case 28, and therefore, the assembly work is easy.

Operation and effects of the present embodiment are described next.

In the vehicle 10 to which is applied the vehicle rear portion structure 14 of the present embodiment, the storage battery modules 20 are structured by the plural storage battery cells 22. Namely, the plural storage battery cells 22 can be structured integrally by the storage battery modules 20.

The storage battery cells 22 are disposed so as to be lined-up in the vehicle longitudinal direction at the storage battery modules 20, and further, the storage battery modules 20 are disposed so as to be lined-up in the vehicle transverse direction. Due thereto, the plural storage battery cells 22 can be arranged efficiently in the vehicle longitudinal direction and the vehicle transverse direction. In particular, because the direction in which the storage battery cells 22 are arrayed at the storage battery modules 20 is the vehicle longitudinal direction, the number of storage battery cells 22 per one row can be made to be larger as compared with a structure in which the storage battery cells 22 are arrayed in the vehicle transverse direction.

In a usual state, smoke is not generated at the storage battery cells 22. However, if, due to some circumstance, smoke is generated, the smoke is exhausted from the vehicle transverse direction central position of the lower surface of the storage battery cell 22. This smoke flows-out into the gap GP1 provided between the downwardly convex portion 30 of the lower case 24 of the storage battery pack 18 and the lower surface of the storage battery cell 22. Further, this smoke passes through the gap GP2 and the gap GP3 that are respectively provided at the rear plate 24R side of the lower case 24, and through the gap GP4 provided between the cover plate 54 and the connector block 50 that are respectively provided at the rear end portion of the lower case 24, and flows all the way to the smoke exhaust valve 52. The gaps GP1 through the gap GP4 respectively structure portions of the smoke exhaust flow path 32. When the pressure at the interior of the smoke exhaust flow path 32 becomes higher than pressure at the exterior, the smoke is exhausted from the smoke exhaust valve 52.

Further, in the vehicle rear portion structure 14 of the present embodiment, the cover plate 54 that structures a portion of the flow path member is disposed at the vehicle vertical direction lower side of the bus bar 70. Therefore, the smoke exhaust flow path 32 can be disposed such that the flow path sectional surface area thereof is ensured, while avoiding interference with the bus bar 70 beneath the bus bar 70.

In the vehicle rear portion structure 14 of the present embodiment, because the cover plate 54 structures a portion of the vehicle vertical direction upper side of the flow path member, the cover plate 54 is positioned between the smoke exhaust flow path 32 and the bus bar 70. Due thereto, smoke contacting the bus bar 70 can be hindered by the cover plate 54.

Further, in the vehicle rear portion structure 14 of the present embodiment, because the cover plate 54 is spaced apart from the bus bar 70, even if the heat of smoke acts on the cover plate 54, it is difficult for heat to be transmitted from the cover plate 54 to the bus bar 70.

Note that some of the respective structures of the above-described present embodiment can be omitted or modified.

Although an embodiment of the present disclosure has been described above, the present disclosure is not limited to the above and can, of course, be implemented by being modified in various ways other than the above within a scope that does not depart from the gist thereof.

## Claims

1. A vehicle rear portion structure, comprising:
a power storage device (18) having a plurality of battery cells (22);
a bus bar (70) disposed at a vehicle rear side of the power storage device (18);
a flow path member (24, 40, 42, 44, 54) configuring a smoke exhaust flow path (32); and
a smoke exhaust flow path cover (54) disposed at a lower side, in a vehicle vertical direction, of the bus bar (70) and configuring a portion of the flow path member (24, 40, 42, 44, 54).

2. The vehicle rear portion structure of claim 1, wherein the smoke exhaust flow path cover (54) configures a portion of an upper side, in the vehicle vertical direction, of the flow path member (24, 40, 42, 44, 54).

3. The vehicle rear portion structure of claim 1 or claim 2, wherein the smoke exhaust flow path cover (54) is spaced apart from the bus bar (70).

4. The vehicle rear portion structure of any one of claim 1 to claim 3, comprising a smoke exhaust valve (52) provided at a downstream side end portion of the smoke exhaust flow path (32), and exhausting smoke to an exterior,
wherein the smoke exhaust valve (52) is disposed at a lower side, in the vehicle vertical direction, of the smoke exhaust flow path cover (54).
